# EUROPEAN PATENT APPLICATION

(11) **EP 4 368 279 A1**
(43) Date of publication of application: **15.05.2024**
(21) Application number: 22837356.9
(22) Date of filing: 27.05.2022
(51) Int. Cl.: B01D 61/38, B01D 65/10, B01D 69/02, B01D 71/06, B01D 53/22

(54) **CARBON DIOXIDE SEPARATION AND RECOVERY DEVICE, AND METHOD FOR OPERATING CARBON DIOXIDE SEPARATION AND RECOVERY DEVICE**

(30) Priority: 07.07.2021 JP 2021112610
(71) Applicant: Panasonic Intellectual Property Management Co., Ltd., Osaka-shi, Osaka 571-0057 (JP)
(72) Inventor: OTA, Tomohiro, Osaka 571-0057 (JP); TAGUCHI, Kiyoshi, Osaka 571-0057 (JP); KUSUYAMA, Takahiro, Osaka 571-0057 (JP); HARADA, Chie, Osaka 571-0057 (JP); SUZUKI, Motohiro, Osaka 571-0057 (JP)
(74) Representative: Grünecker Patent- und Rechtsanwälte PartG mbB
(86) International application number: PCT/JP2022/021826
(87) International publication number: WO 2023/281935

(57) **Abstract**

Controller (41) of carbon dioxide separation and recovery device (31) controls separator temperature controller (6), temperature and humidity controller (10), and recovery pump (15) to set a temperature and a humidity of a carbon dioxide-containing gas and a pressure of permeating gas channel (13) to a first predetermined condition. Controller (41) also estimates a deterioration state of separation membrane (2) by comparing a flow rate of a permeating gas under the first predetermined condition, the flow rate being detected by flow rate detector (14), with a flow rate of the permeating gas under the first predetermined condition, the flow rate being measured in advance.

## Description

### TECHNICAL FIELD

The present disclosure relates to a carbon dioxide separation and recovery device, and a method for operating a carbon dioxide separation and recovery device.

### BACKGROUND ART

For example, PTL 1 discloses a device including a plurality of hydrogen separation units that separate a hydrogen gas from a mixed gas containing a hydrogen gas by a hydrogen separation membrane. In addition, the device includes a supply valve, detection means, detected value acquisition means, change amount calculation means, comparison means, and control means. The supply valve is provided upstream of each of the hydrogen separation units to supply a mixed gas. The detection means is provided downstream of each of the hydrogen separation units to detect the amount of separated hydrogen gas. The detected value acquisition means reads values from each detection means at predetermined time intervals. The change amount calculation means calculates a change amount per predetermined time from the detected values read by the detected value acquisition means, and the comparison means compares a plurality of the change amounts calculated by the change amount calculation means. The control means detects the hydrogen separation unit in which the hydrogen separation membrane deteriorates in hydrogen permeability on the basis of the comparison result, and operates the supply valve provided in the detected hydrogen separation unit to a closed state to stop operation of the detected hydrogen separation unit.

In addition, for example, PTL 2 discloses a method for diagnosing the soundness of a hollow fiber membrane module including a plurality of membrane elements each including a hollow fiber membrane and a housing accommodating the hollow fiber membrane. This method diagnoses the soundness of the hollow fiber membrane module from an integrated value of pressure drop rates of the hollow fiber membrane module obtained by introducing a pressurized gas into secondary sides of the hollow fiber membranes to increase a pressure to a set pressure, then stopping the introduction of the pressurized gas, sealing the secondary sides of the hollow fiber membranes, and measuring the pressure drop rates after sealing.

### Citation List

### Patent Literature

PTL 1: Unexamined Japanese Patent Publication No. 2007-260629
PTL 2: Unexamined Japanese Patent Publication No. 2016-036766

### SUMMARY OF THE INVENTION

The present disclosure provides a carbon dioxide separation and recovery device, and a method for operating a carbon dioxide separation and recovery device capable of estimating a deterioration state of a separation membrane that separates carbon dioxide with a small error during operation.

A carbon dioxide separation and recovery device according to the present disclosure includes a carbon dioxide-containing gas supply channel, a carbon dioxide separator, a temperature and humidity controller, a separator temperature controller, a pressure detector, a permeating gas channel, a flow rate detector, a recovery pump, and a controller.

A carbon dioxide-containing gas containing at least carbon dioxide flows through the carbon dioxide-containing gas supply channel.

The carbon dioxide separator includes a first space, the carbon dioxide-containing gas flowing into the first space through the carbon dioxide-containing gas supply channel, a separation membrane configured to separate carbon dioxide contained in the carbon dioxide-containing gas by selectively allowing the carbon dioxide to permeate the separation membrane, and a second space partitioned from the first space by the separation membrane.

The temperature and humidity controller is disposed on the carbon dioxide-containing gas supply channel and configured to control a temperature and a humidity of the carbon dioxide-containing gas before flowing into the first space.

The separator temperature controller is configured to control a temperature inside the carbon dioxide separator.

The pressure detector is configured to detect a pressure of the second space.

A permeating gas permeating the separation membrane and discharged from the second space flows through the permeating gas channel.

The flow rate detector is disposed on the permeating gas channel and configured to detect a flow rate of the permeating gas.

The recovery pump is disposed downstream of the flow rate detector on the permeating gas channel and configured to suck the permeating gas.

The controller is configured to control the separator temperature controller, the temperature and humidity controller, and the recovery pump to set the temperature and the humidity of the carbon dioxide-containing gas and a pressure of the permeating gas channel to a first predetermined condition. The controller is also configured to estimate a deterioration state of the separation membrane by comparing a flow rate of the permeating gas under the first predetermined condition, the flow rate being detected by the flow rate detector, with a flow rate of the permeating gas under the first predetermined condition, the flow rate being measured in advance.

In addition, a method for operating a carbon dioxide separation and recovery device according to the present disclosure includes a condition adjustment step and a deterioration state estimation step.

The carbon dioxide separation and recovery device includes a carbon dioxide-containing gas supply channel, a carbon dioxide separator, a temperature and humidity controller, a separator temperature controller, a pressure detector, a permeating gas channel, a flow rate detector, and a recovery pump.

A carbon dioxide-containing gas containing at least carbon dioxide flows through the carbon dioxide-containing gas supply channel.

The carbon dioxide separator includes a first space, the carbon dioxide-containing gas flowing into the first space through the carbon dioxide-containing gas supply channel, a separation membrane configured to separate carbon dioxide contained in the carbon dioxide-containing gas by selectively allowing the carbon dioxide to permeate the separation membrane, and a second space partitioned from the first space by the separation membrane.

The temperature and humidity controller is disposed on the carbon dioxide-containing gas supply channel and configured to control a temperature and a humidity of the carbon dioxide-containing gas before flowing into the first space.

The separator temperature controller is configured to control a temperature inside the carbon dioxide separator.

The pressure detector is configured to detect a pressure of the second space.

A permeating gas permeating the separation membrane and discharged from the second space flows through the permeating gas channel.

The flow rate detector is disposed on the permeating gas channel and configured to detect a flow rate of the permeating gas.

The recovery pump is disposed downstream of the flow rate detector on the permeating gas channel and configured to suck the permeating gas.

The condition adjustment step is a step of controlling the separator temperature controller, the temperature and humidity controller, and the recovery pump to set the temperature and the humidity of the carbon dioxide-containing gas and a pressure of the permeating gas channel to a first predetermined condition.

The deterioration state estimation step is a step of estimating a deterioration state of the separation membrane by comparing a flow rate of the permeating gas under the first predetermined condition, the flow rate being detected by the flow rate detector, with a flow rate of the permeating gas under the first predetermined condition, the flow rate being measured in advance.

The carbon dioxide separation and recovery device and the method for operating a carbon dioxide separation and recovery device according to the present disclosure can estimate the deterioration state of the separation membrane that separates carbon dioxide with a small error during operation.

### BRIEF DESCRIPTION OF THE DRAWINGS

Fig. 1 is a block diagram illustrating a configuration of a carbon dioxide separation and recovery device according to a first exemplary embodiment.
Fig. 2 is a flowchart illustrating a deterioration state estimation operation of a separation membrane according to the first exemplary embodiment.
Fig. 3 is a flowchart illustrating a deterioration state estimation operation of a separation membrane with higher accuracy according to the first exemplary embodiment.

### DESCRIPTION OF EMBODIMENT

### (Underlying knowledge and the like of present disclosure)

A technique of a separation membrane including a so-called molecular sieve in which a large number of pores having a molecular size are formed has been known as a technique for separating and recovering carbon dioxide since the present inventors arrived at the present disclosure. This separation membrane has a problem that a smaller molecule is more easily separated by the separation membrane, and a separation gas has lower purity in a case in which there are a plurality of types of molecules having substantially the same size.

In contrast, there has been a technique of a polymer membrane that separates only carbon dioxide by selectively allowing the carbon dioxide to permeate the membrane by a chemical reaction. This allows for an increase in purity of a separation gas.

On the other hand, in such a separation membrane, defects are formed in the membrane due to deterioration, whereby a flow rate of a gas permeating the membrane increases, and the permeating gas decreases in purity. Therefore, there has been a gas purifier that estimates a deterioration state of a separation membrane by detecting a flow rate of a gas permeating the membrane.

In addition, there has been an evaluation method in which a pressurized gas is introduced into a second space of a separator including a separation membrane, the second space is then sealed, and a deterioration state of the separation membrane is estimated from a pressure drop rate after sealing.

Meanwhile, the flow rate of the permeating gas changes according to a humidity of a gas supplied to the separation membrane and a temperature change in the separation membrane during operation of a system including the separation membrane. Thus, in a case in which the deterioration state is estimated during operation by the flow rate of the gas permeating the membrane, a large error occurs.

In addition, in a case in which the deterioration state of the separation membrane is estimated by stopping the operation, the deterioration state can be estimated with a small error, but it is necessary to stop and start the device, which deteriorates energy efficiency.

As described above, there has been a problem that it is difficult to simultaneously achieve estimation of the deterioration state during operation and estimation of the deterioration state with a small error.

Under such circumstances, the inventors have obtained an idea that a flow rate of a permeating gas under predetermined conditions can be compared with a flow rate of the permeating gas under the predetermined conditions measured in advance at the time of initial startup by keeping a temperature and a humidity of a gas supplied to a separation membrane and a pressure of the permeating gas under the predetermined conditions even during operation. The inventors have also obtained an idea that it is possible to detect a change in the flow rate of the permeating gas derived from deterioration of the separation membrane while reducing an influence of a change in the flow rate of the permeating gas depending on operating conditions.

After realizing the ideas, the inventors have found a problem that it is necessary to reduce an error of a flow meter in order to estimate a deterioration state with a smaller error, and also to create a state in which the permeating gas has a larger flow rate in order to make an increase in the flow rate due to deterioration of the separation membrane more noticeable. The inventors have conceived to construct a subject matter of the present disclosure in order to solve the problem.

Therefore, the present disclosure provides a carbon dioxide separation and recovery device, and a method for operating a carbon dioxide separation and recovery device capable of estimating a deterioration state of a separation membrane that separates carbon dioxide with a small error during operation.

A carbon dioxide separation and recovery device according to the present disclosure includes a carbon dioxide-containing gas supply channel, a carbon dioxide separator, a temperature and humidity controller, a separator temperature controller, a pressure detector, a permeating gas channel, a flow rate detector, a recovery pump, and a controller. A carbon dioxide-containing gas containing at least carbon dioxide flows through the carbon dioxide-containing gas supply channel. The carbon dioxide separator includes a first space, the carbon dioxide-containing gas flowing into the first space through the carbon dioxide-containing gas supply channel, a separation membrane configured to separate carbon dioxide contained in the carbon dioxide-containing gas by selectively allowing the carbon dioxide to permeate the separation membrane, and a second space partitioned from the first space by the separation membrane. The temperature and humidity controller is disposed on the carbon dioxide-containing gas supply channel and configured to control a temperature and a humidity of the carbon dioxide-containing gas before flowing into the first space. The separator temperature controller is configured to control a temperature inside the carbon dioxide separator. The pressure detector is configured to detect a pressure of the second space. A permeating gas permeating the separation membrane and discharged from the second space flows through the permeating gas channel. The flow rate detector is disposed on the permeating gas channel and configured to detect a flow rate of the permeating gas. The recovery pump is disposed downstream of the flow rate detector on the permeating gas channel and configured to suck the permeating gas. The controller is configured to control the separator temperature controller, the temperature and humidity controller, and the recovery pump to set the temperature and the humidity of the carbon dioxide-containing gas and a pressure of the permeating gas channel to a first predetermined condition. The controller is also configured to estimate a deterioration state of the separation membrane by comparing a flow rate of the permeating gas under the first predetermined condition, the flow rate being detected by the flow rate detector, with a flow rate of the permeating gas under the first predetermined condition, the flow rate being measured in advance.

The carbon dioxide separation and recovery device according to the present disclosure measures the flow rate of the permeating gas while setting the temperature and the humidity of the carbon dioxide-containing gas and the pressure of the permeating gas channel to the first predetermined condition. As a result, the carbon dioxide separation and recovery device according to the present disclosure can compare the flow rate of the permeating gas under the first predetermined condition with the flow rate of the permeating gas under the first predetermined condition measured in advance. That is, the carbon dioxide separation and recovery device according to the present disclosure can detect a change in the flow rate of the permeating gas derived from deterioration of the separation membrane while reducing an influence of a change in the flow rate of the permeating gas depending on operating conditions. Therefore, the carbon dioxide separation and recovery device according to the present disclosure can estimate the deterioration state of the separation membrane that separates carbon dioxide with a small error during operation.

In addition, the separation membrane may contain any one of an amine compound, an ionic liquid, and an alkali carbonate that reversibly react with carbon dioxide.

In addition, the controller may control the separator temperature controller, the temperature and humidity controller, and the recovery pump to achieve a second predetermined condition including at least a humidity higher than the humidity of the carbon dioxide-containing gas under the first predetermined condition. In addition, the controller may estimate the deterioration state of the separation membrane by measuring a flow rate of the permeating gas under the second predetermined condition, and comparing the flow rate with a flow rate of the permeating gas under the second predetermined condition, the flow rate being measured in advance.

In addition, the controller may control the separator temperature controller, the temperature and humidity controller, and the recovery pump to achieve a third predetermined condition including at least a temperature higher than the temperature of the carbon dioxide-containing gas under the first predetermined condition. In addition, the controller may estimate the deterioration state of the separation membrane by measuring a flow rate of the permeating gas under the third predetermined condition, and comparing the flow rate with a flow rate of the permeating gas under the third predetermined condition, the flow rate being measured in advance.

In addition, the controller may control the separator temperature controller, the temperature and humidity controller, and the recovery pump to achieve a fourth predetermined condition including at least a pressure lower than the pressure of the permeating gas channel under the first predetermined condition. In addition, the controller may estimate the deterioration state of the separation membrane by measuring a flow rate of the permeating gas under the fourth predetermined condition, and comparing the flow rate with a flow rate of the permeating gas under the fourth predetermined condition, the flow rate being measured in advance.

The carbon dioxide separation and recovery device according to the present disclosure may include a carbon dioxide concentration detector disposed on the permeating gas channel and configured to measure a carbon dioxide concentration of the permeating gas.

A method for operating a carbon dioxide separation and recovery device according to the present disclosure includes a condition adjustment step and a deterioration state estimation step. The carbon dioxide separation and recovery device includes a carbon dioxide-containing gas supply channel, a carbon dioxide separator, a temperature and humidity controller, a separator temperature controller, a pressure detector, a permeating gas channel, a flow rate detector, and a recovery pump. A carbon dioxide-containing gas containing at least carbon dioxide flows through the carbon dioxide-containing gas supply channel. The carbon dioxide separator includes a first space, the carbon dioxide-containing gas flowing into the first space through the carbon dioxide-containing gas supply channel, a separation membrane configured to separate carbon dioxide contained in the carbon dioxide-containing gas by selectively allowing the carbon dioxide to permeate the separation membrane, and a second space partitioned from the first space by the separation membrane. The temperature and humidity controller is disposed on the carbon dioxide-containing gas supply channel and configured to control a temperature and a humidity of the carbon dioxide-containing gas before flowing into the first space. The separator temperature controller is configured to control a temperature inside the carbon dioxide separator. The pressure detector is configured to detect a pressure of the second space. A permeating gas permeating the separation membrane and discharged from the second space flows through the permeating gas channel. The flow rate detector is disposed on the permeating gas channel and configured to detect a flow rate of the permeating gas. The recovery pump is disposed downstream of the flow rate detector on the permeating gas channel and configured to suck the permeating gas. The condition adjustment step is a step of controlling the separator temperature controller, the temperature and humidity controller, and the recovery pump to set the temperature and the humidity of the carbon dioxide-containing gas and a pressure of the permeating gas channel to a first predetermined condition. The deterioration state estimation step is a step of estimating a deterioration state of the separation membrane by comparing a flow rate of the permeating gas under the first predetermined condition, the flow rate being detected by the flow rate detector, with a flow rate of the permeating gas under the first predetermined condition, the flow rate being measured in advance.

Hereinafter, exemplary embodiments will be described in detail with reference to the drawings. However, descriptions more in detail than necessary may be omitted. For example, detailed descriptions of already well-known matters or redundant descriptions of substantially the same configuration may be omitted.

Note that the accompanying drawings and the following description are only presented to help those skilled in the art fully understand the present disclosure, and are not intended to limit the subject matters described in the scope of claims.

### (First exemplary embodiment)

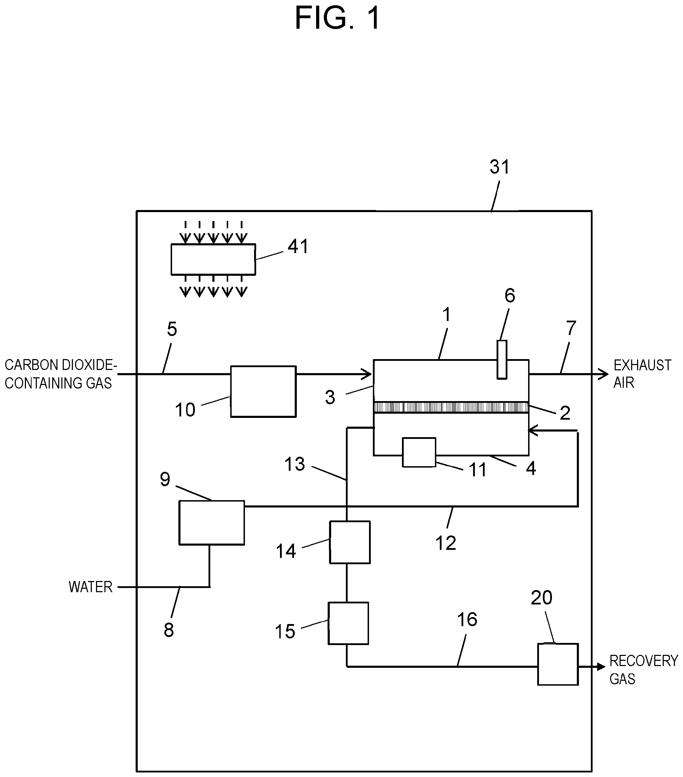

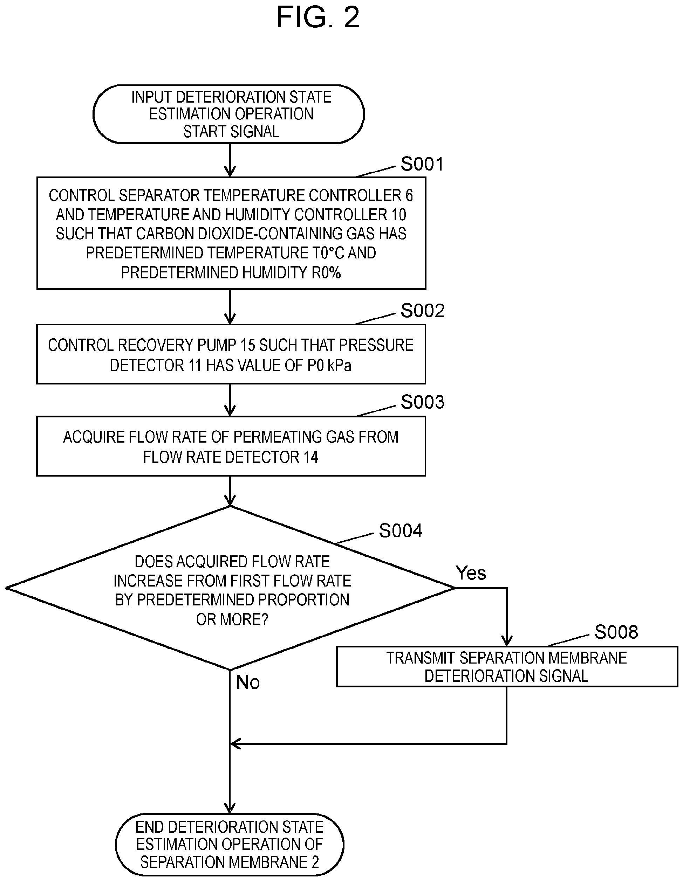

Hereinafter, a first exemplary embodiment as an example of the present disclosure will be described with reference to Figs. 1 and 2.

### [1-1. Configuration]

Fig. 1 is a block diagram illustrating a configuration of carbon dioxide separation and recovery device 31 according to the first exemplary embodiment. In Fig. 1, carbon dioxide separation and recovery device 31 includes carbon dioxide separator 1, carbon dioxide-containing gas supply channel 5, separator temperature controller 6, exhaust channel 7, water supply channel 8, and evaporator 9. Carbon dioxide separation and recovery device 31 also includes temperature and humidity controller 10, pressure detector 11, water vapor supply channel 12, permeating gas channel 13, flow rate detector 14, recovery pump 15, recovery channel 16, carbon dioxide concentration detector 20, and controller 41.

Carbon dioxide separator 1 includes separation membrane 2, and first space 3 and second space 4 partitioned by separation membrane 2. In addition, the periphery of carbon dioxide separator 1 is covered with a heat insulating material (not illustrated).

Separation membrane 2 is a polymer membrane containing monoethanolamine that is an amine compound, and selectively allows carbon dioxide and water vapor to permeate separation membrane 2.

In addition, separation membrane 2 has a property to increase a permeation rate of carbon dioxide as the carbon dioxide has a higher temperature and humidity up to a certain value.

Separation membrane 2 is formed in a cylindrical shape, and a carbon dioxide-containing gas is supplied from the inner peripheral surface side of separation membrane 2 to permeate to the outer peripheral surface side of separation membrane 2.

Carbon dioxide-containing gas supply channel 5 and exhaust channel 7 are connected to first space 3, and a gas containing carbon dioxide is supplied to first space 3 from carbon dioxide-containing gas supply channel 5. In the present exemplary embodiment, for example, an exhaust gas obtained by burning a town gas containing hydrocarbon is used as the carbon dioxide-containing gas.

Water vapor supply channel 12 and permeating gas channel 13 are connected to second space 4, and a permeating gas in which carbon dioxide is concentrated from the carbon dioxide-containing gas is supplied to second space 4 from first space 3 through separation membrane 2.

Carbon dioxide-containing gas supply channel 5 is a channel through which the carbon dioxide-containing gas flows, and supplies the carbon dioxide-containing gas to first space 3 of carbon dioxide separator 1.

Separator temperature controller 6 is a heater for controlling a temperature of separation membrane 2. That is, separator temperature controller 6 controls a temperature inside carbon dioxide separator 1.

Exhaust channel 7 is a channel that is connected to the downstream side of first space 3 and discharges an exhaust gas that has not permeated separation membrane 2 of carbon dioxide separator 1 to the outside.

Temperature and humidity controller 10 is a temperature and humidity controller that controls a temperature and a humidity in the carbon dioxide-containing gas supplied from carbon dioxide-containing gas supply channel 5 by using temperature-controlled water. That is, temperature and humidity controller 10 is disposed on carbon dioxide-containing gas supply channel 5, and controls the temperature and humidity of the carbon dioxide-containing gas before flowing into first space 3.

Pressure detector 11 is a sensor for detecting a pressure of second space 4.

Water supply channel 8 and water vapor supply channel 12 are connected to evaporator 9, and water from which impurities have been removed by a purifier (not illustrated) such as an ion exchange resin is supplied to evaporator 9 from water supply channel 8. Water evaporated in evaporator 9 is supplied as water vapor from water vapor supply channel 12 to second space 4.

Permeating gas channel 13 and recovery pump 15 are connected to flow rate detector 14. Flow rate detector 14 is a sensor that is provided on permeating gas channel 13 to measure a flow rate of the permeating gas supplied from permeating gas channel 13.

Flow rate detector 14 and recovery channel 16 are connected to recovery pump 15. Recovery pump 15 recovers the permeating gas in which carbon dioxide is concentrated from second space 4, and the recovered permeating gas is stored in a recovery gas tank (not illustrated) outside the device from recovery channel 16. That is, recovery pump 15 is provided downstream of flow rate detector 14 on permeating gas channel 13, and sucks the permeating gas.

Carbon dioxide concentration detector 20 is provided on recovery channel 16, and detects a carbon dioxide concentration (hereinafter, sometimes referred to as CO2 concentration) in a recovery gas that is carbon dioxide including water vapor flowing through recovery channel 16. In the present exemplary embodiment, permeating gas channel 13 and recovery channel 16 are different channels. However, recovery channel 16 may be a channel forming a part of permeating gas channel 13. In this case, it can be said that carbon dioxide concentration detector 20 is disposed on permeating gas channel 13.

Controller 41 controls carbon dioxide separation and recovery device 31. Specifically, controller 41 controls separator temperature controller 6, temperature and humidity controller 10, and recovery pump 15 so as to set the temperature and humidity of the carbon dioxide-containing gas and a pressure of permeating gas channel 13 to first predetermined conditions. Controller 41 also estimates a deterioration state of separation membrane 2 by comparing a flow rate of the permeating gas under the first predetermined conditions detected by flow rate detector 14 with a flow rate of the permeating gas under the first predetermined conditions measured in advance. Controller 41 includes a signal input and output unit (not illustrated), an arithmetic processor (not illustrated), and a storage (not illustrated) that stores a control program. Note that controller 41 includes a computer system including a processor and a memory. The computer system functions as controller 41 by causing the processor to execute a control program stored in the memory. In the explanation herein, the control program executed by the processor is recorded in the memory of the computer system in advance, but may also be provided by being recorded in a non-transitory recording medium such as a memory card, or provided over a telecommunication line such as the Internet.

### [1-2. Operation]

The following describes operations and actions of carbon dioxide separation and recovery device 31 configured as described above.

The following operation is performed by controller 41 controlling carbon dioxide separation and recovery device 31.

### [1-2-1 Basic operation]

First, the carbon dioxide-containing gas supplied from carbon dioxide-containing gas supply channel 5 to temperature and humidity controller 10 has a flow rate of 200 NL/min, a temperature of 60°C, a humidity of 80%, and a carbon dioxide concentration of 20%. Here, the flow rate and the carbon dioxide concentration of the carbon dioxide-containing gas are represented by values excluding moisture (the same applies hereinafter).

A pressure of first space 3 becomes an atmospheric pressure by opening the downstream side of exhaust channel 7 to the atmosphere.

A temperature of carbon dioxide separator 1 controlled by separator temperature controller 6 is controlled to be 60°C, which is a temperature suitable for operation of separation membrane 2.

A temperature of evaporator 9 is controlled to be equal to the temperature of carbon dioxide separator 1. At this time, water evaporated in evaporator 9 is supplied as water vapor through water vapor supply channel 12 to second space 4.

Carbon dioxide in the carbon dioxide-containing gas supplied to first space 3 permeates separation membrane 2 and moves to second space 4 due to a partial pressure difference of carbon dioxide between first space 3 and second space 4. At this time, the carbon dioxide permeates together with water vapor.

The permeating gas in which the carbon dioxide that has permeated to second space 4 is concentrated is sucked by recovery pump 15 connected to second space 4 through permeating gas channel 13. The carbon dioxide containing water vapor discharged from an outlet of recovery pump 15 is discharged as the recovery gas from recovery channel 16, and stored in the recovery gas tank (not illustrated) outside the device.

Flow rate detector 14 detects the flow rate of the permeating gas supplied to permeating gas channel 13.

A non-permeating gas remaining without permeating separation membrane 2 is discharged from exhaust channel 7 to the outside of the device.

### [1-2-2. Deterioration state estimation operation of separation membrane]

Fig. 2 is a flowchart illustrating a deterioration state estimation operation of separation membrane 2 of carbon dioxide separation and recovery device 31.

The following operation is performed by controller 41 controlling carbon dioxide separation and recovery device 31 with a deterioration state estimation operation start signal input to controller 41 when the flow rate of the permeating gas detected by flow rate detector 14 exceeds a predetermined value, or at the time of periodic inspection for periodically inspecting a deterioration aspect. Note that the deterioration state estimation operation start signal is output by flow rate detector 14 when the flow rate of the permeating gas exceeds a predetermined value. In addition, the deterioration state estimation operation start signal is input to controller 41 by an administrator of carbon dioxide separation and recovery device 31 performing a predetermined operation from an operation unit (not illustrated) at the time of periodic inspection.

When the deterioration state estimation operation start signal is input, controller 41 starts the deterioration state estimation operation of separation membrane 2. First, controller 41 performs a temperature and humidity control operation. Specifically, controller 41 controls separator temperature controller 6 and temperature and humidity controller 10 such that the temperature of the carbon dioxide-containing gas becomes predetermined temperature T0 (°C) and the humidity becomes predetermined humidity R0 (%) (step S001).

In the present exemplary embodiment, temperature T0 is 60°C, and humidity R0 is 80%. However, these values are examples, and temperature T0 and humidity R0 are not limited to these values. For example, temperature T0 may be a temperature within a range of 40°C to 60°C, and humidity R0 may be a value within a range of 50% to 80%. In addition, temperature T0 and humidity R0 do not have to be constant values, and may be controlled such that temperature T0 falls within a predetermined range such as 40°C to 60°C and humidity R0 falls within a predetermined range such as 50% to 80%.

Next, controller 41 performs a pressure control operation. Specifically, controller 41 controls recovery pump 15 such that the pressure of second space 4 detected by pressure detector 11 becomes predetermined pressure P0 (kPa) (step S002). Note that the processing in step S001 and the processing in step S002 correspond to an example of the condition adjustment step according to the present disclosure.

In the present exemplary embodiment, predetermined pressure P0 is 10 kPa. However, this value is an example, and pressure P0 is not limited to this value. For example, pressure P0 may be a value within a range of 5 kPa to 20 kPa. In addition, pressure P0 does not have to be a constant value, and may be controlled so as to fall within a predetermined range such as 5 kPa to 20 kPa.

Next, controller 41 performs a flow rate acquisition operation. Specifically, controller 41 acquires the flow rate of the permeating gas from flow rate detector 14 (step S003).

Next, controller 41 compares the acquired flow rate with a flow rate (hereinafter, also referred to as "first flow rate") acquired when carbon dioxide separation and recovery device 31 is operated under the first predetermined conditions, that is, temperature T0, humidity R0, and pressure P0 of the carbon dioxide-containing gas at the time of initial startup. Specifically, controller 41 determines whether the acquired flow rate has increased from the first flow rate by a predetermined proportion or more (step S004). Note that the processing in step S004 corresponds to an example of the deterioration state estimation step according to the present disclosure.

Here, for the estimation of the deterioration state, the flow rate (first flow rate) acquired when carbon dioxide separation and recovery device 31 is operated under the first predetermined conditions at the time of initial startup is used as a comparison target to be compared with the acquired flow rate, but the comparison target is not limited thereto. For example, as the flow rate before deterioration, a flow rate measured by a manufacturer operating carbon dioxide separation and recovery device 31 under the first predetermined conditions in advance may be used, or a flow rate measured by operating carbon dioxide separation and recovery device 31 under the first predetermined conditions at the time of second or subsequent startup may be used.

In addition, in the present exemplary embodiment, the deterioration is estimated by setting the predetermined proportion to 5%. However, this value is an example, and the predetermined proportion is not limited to this value. The predetermined proportion may be any proportion within a range of 1% to 10%, for example.

In a case in which the acquired flow rate has increased by the predetermined proportion or more (Yes in step S004), controller 41 estimates the degree of deterioration of separation membrane 2 according to a proportion with which the flow rate increases, transmits a separation membrane deterioration signal (step S008), and ends the deterioration state estimation operation of separation membrane 2. On the other hand, in a case in which the acquired flow rate has not increased by the predetermined proportion or more (No in step S004), the deterioration state estimation operation of separation membrane 2 is ended. Note that carbon dioxide separation and recovery device 31 may include, for example, a display such as a lamp or an indicator, and may notify an administrator of carbon dioxide separation and recovery device 31 by the display in a case in which controller 41 transmits a separation membrane deterioration signal.

### [1-2-3. Deterioration state estimation operation of separation membrane with higher accuracy]

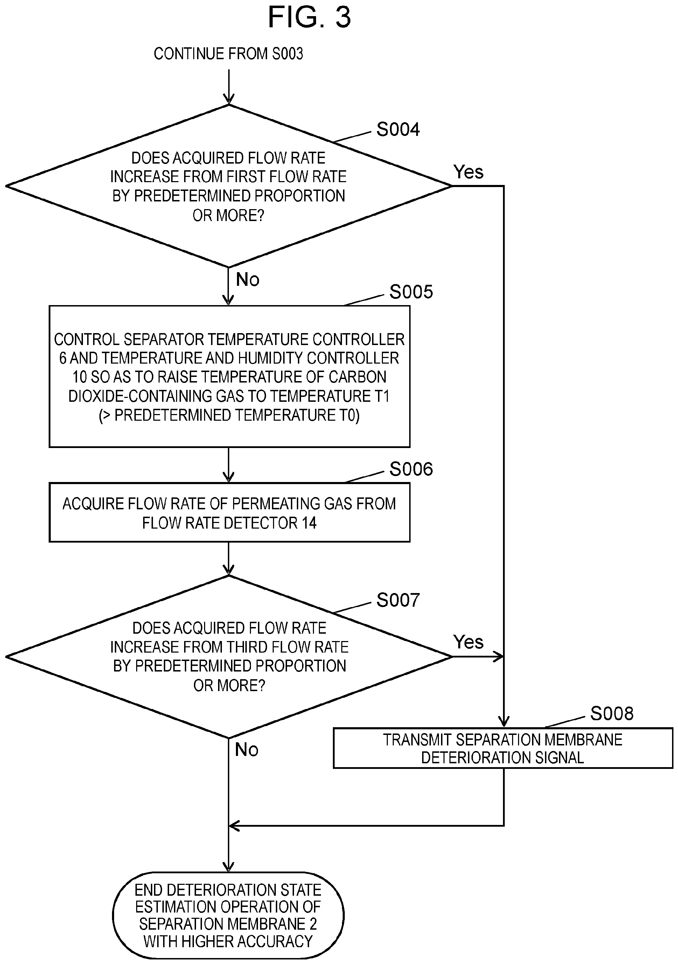

Although the deterioration state of separation membrane 2 is estimated in [1-2-2. Deterioration estimation operation of separation membrane], there may be a case in which the deterioration state cannot be estimated because there is no difference between the flow rate acquired by flow rate detector 14 and the flow rate as the comparison target or the difference is within an error range, for example, due to a problem of accuracy. In addition, there may be a case in which the deterioration state cannot be correctly measured under the first predetermined conditions when the predetermined proportion is set to a small value such as 0.1%, or the deterioration state is desired to be estimated more accurately. Operation of carbon dioxide separation and recovery device 31 capable of coping with such a case will be described with reference to Fig. 3.

Fig. 3 is a flowchart illustrating a deterioration state estimation operation of separation membrane 2 with higher accuracy according to the first exemplary embodiment. Note that processing in step S004 illustrated in Fig. 3 is executed following the processing in step S001 to step S003 of the deterioration state estimation operation of separation membrane 2 illustrated in Fig. 2. Therefore, in Fig. 3, a description of the processing in step S001 to step S003 is omitted.

Following the processing in step S001 to step S003, controller 41 determines whether the flow rate acquired in the processing in step S003 has increased from the first flow rate by the predetermined proportion or more (step S004). In a case in which the acquired flow rate has increased by the predetermined proportion or more (Yes in step S004), controller 41 executes processing in step S008 (similar to step S008 in Fig. 3). On the other hand, in a case in which the acquired flow rate has not increased by the predetermined proportion or more (No in step S004), controller 41 executes processing in step S005.

Specifically, controller 41 controls separator temperature controller 6 and temperature and humidity controller 10 so as to raise the temperature of the carbon dioxide-containing gas to temperature T1 higher than predetermined temperature T0 (step S005).

Here, temperature T1 is 80°C. However, this value is an example, and temperature T1 is not limited to this value, and may use another value depending on design or the like. As temperature T1, for example, any value in a range of 70°C to 80°C may be used. In addition, similarly to temperature T0, temperature T1 may be controlled so as to fall within a predetermined range.

Next, controller 41 performs a flow rate acquisition operation. That is, controller 41 acquires the flow rate of the permeating gas from flow rate detector 14 (step S006).

Next, controller 41 compares the acquired flow rate with a flow rate (hereinafter, also referred to as "third flow rate") acquired in advance by operating carbon dioxide separation and recovery device 31 under third predetermined conditions, that is, temperature T1, humidity R0, and pressure P0 of the carbon dioxide-containing gas at the time of initial startup. Specifically, controller 41 determines whether the flow rate acquired in step S006 has increased from the third flow rate by a predetermined proportion or more (step S007).

Here, for the estimation of the deterioration state, the flow rate (third flow rate) acquired in advance by operating carbon dioxide separation and recovery device 31 under the third predetermined conditions at the time of initial startup is used as a comparison target to be compared with the acquired flow rate, but the comparison target is not limited thereto.

For example, as the flow rate before deterioration, a flow rate measured by a manufacturer operating carbon dioxide separation and recovery device 31 under the third predetermined conditions in advance may be used, or a flow rate measured by operating carbon dioxide separation and recovery device 31 under the third predetermined conditions in which the temperature is changed to temperature T1 at the time of second or subsequent startup may be used. In the present exemplary embodiment, the deterioration is estimated on the assumption that the predetermined proportion in the processing in step S007 is 5%, similarly to the predetermined proportion in the processing in step S004. However, this value is an example, and the predetermined proportion is not limited to this value. The predetermined proportion in the processing in step S007 may be any proportion within a range of 1% to 10%, for example.

In a case in which the flow rate acquired in step S006 has increased by the predetermined proportion or more (Yes in step S007), controller 41 estimates the degree of deterioration of separation membrane 2 according to a proportion with which the flow rate increases, and transmits a separation membrane deterioration signal (step S008). When the processing in step S008 is executed, controller 41 ends the deterioration state estimation operation of separation membrane 2 with higher accuracy. On the other hand, in a case in which the flow rate acquired in step S006 has not increased by the predetermined proportion or more (No in step S007), controller 41 ends the deterioration state estimation operation of separation membrane 2 with higher accuracy.

### [1-3. Effects and the like]

As described above, in the present exemplary embodiment, carbon dioxide separation and recovery device 31 includes carbon dioxide separator 1 including separation membrane 2, first space 3, and second space 4, carbon dioxide-containing gas supply channel 5, separator temperature controller 6, exhaust channel 7, water supply channel 8, and evaporator 9. Carbon dioxide separation and recovery device 31 also includes temperature and humidity controller 10, pressure detector 11, water vapor supply channel 12, permeating gas channel 13, flow rate detector 14, recovery pump 15, recovery channel 16, carbon dioxide concentration detector 20, and controller 41.

Carbon dioxide separation and recovery device 31 measures the flow rate of the permeating gas while operating under the first predetermined conditions during the deterioration state estimation operation of separation membrane 2. As a result, carbon dioxide separation and recovery device 31 can compare the flow rate of the permeating gas under the first predetermined conditions with the flow rate (first flow rate) of the permeating gas under the first predetermined conditions measured in advance at the time of initial startup. That is, carbon dioxide separation and recovery device 31 can detect a change in the flow rate derived from the deterioration of separation membrane 2 while reducing an influence of a change in the flow rate of the permeating gas depending on operating conditions.

Therefore, carbon dioxide separation and recovery device 31 can estimate the deterioration state of separation membrane 2 with a small error during operation.

In addition, in the present exemplary embodiment, carbon dioxide separation and recovery device 31 may be configured to be able to cope with a case in which it is difficult to estimate the deterioration state under the first predetermined conditions or it is desired to estimate the deterioration state more accurately. That is, the following operation may be performed in a case in which the flow rate of the permeating gas detected by flow rate detector 14 when the carbon dioxide-containing gas is caused to flow under the first predetermined conditions is equal to or within a predetermined range of the flow rate (first flow rate) of the permeating gas under the first predetermined conditions measured in advance. Controller 41 of carbon dioxide separation and recovery device 31 controls separator temperature controller 6 and temperature and humidity controller 10 so as to raise the temperature of the carbon dioxide-containing gas to temperature T1 higher than predetermined temperature T0. Then, controller 41 compares the acquired flow rate of the permeating gas with the flow rate (third flow rate) of the permeating gas acquired when carbon dioxide separation and recovery device 31 is operated with temperature T1, humidity R0, and pressure P0 of the carbon dioxide-containing gas at the time of initial startup. Specifically, controller 41 determines whether the acquired flow rate of the permeating gas has increased from the third flow rate by the predetermined proportion or more.

As a result, carbon dioxide separation and recovery device 31 can increase the flow rate of the permeating gas as compared with that at the time of operating with temperature T0, humidity R0, and pressure P0 of the carbon dioxide-containing gas. Therefore, carbon dioxide separation and recovery device 31 can reduce an influence of an error of a flow meter, and can make an increase in the flow rate of the permeating gas due to the deterioration of separation membrane 2 more noticeable.

That is, carbon dioxide separation and recovery device 31 can estimate the deterioration state of separation membrane 2 with a smaller error during operation.

In addition, in the present exemplary embodiment, temperature T1 higher than temperature T0 under the first predetermined conditions is used as the temperature of the carbon dioxide-containing gas in [1-2-3. Deterioration state estimation operation of separation membrane with higher accuracy]. That is, carbon dioxide separation and recovery device 31 estimates the deterioration state of separation membrane 2 by comparing the flow rates of the permeating gas under the third predetermined conditions including at least temperature T1 higher than temperature T0 of the carbon dioxide-containing gas under the first predetermined conditions. However, humidity R1 higher than humidity R0 of the carbon dioxide-containing gas may be used instead of temperature T1. That is, carbon dioxide separation and recovery device 31 may estimate the deterioration state of separation membrane 2 by comparing flow rates of the permeating gas under second predetermined conditions including at least humidity R1 higher than humidity R0 of the carbon dioxide-containing gas under the first predetermined conditions.

Here, humidity R1 of the carbon dioxide-containing gas is, for example, 80% to 90%, and is preferably 90%. However, this value is an example, and humidity R1 is not limited to this value. In addition, similarly to humidity R0, humidity R1 may be controlled so as to fall within a predetermined range.

In this case, it is necessary to change the processing in step S005 and step S007 in Fig. 3 as follows. That is, the processing in step S005 is changed to control temperature and humidity controller 10 such that humidity R1 higher than humidity R0 of the carbon dioxide-containing gas is obtained. In addition, the processing in step S007 is changed to compare the flow rate of the permeating gas acquired in step S006 with a flow rate of the permeating gas acquired when carbon dioxide separation and recovery device 31 is operated with temperature T0, humidity R1, and pressure P0 of the carbon dioxide-containing gas at the time of initial startup. Specifically, it is determined whether the flow rate of the permeating gas acquired in step S006 has increased by the predetermined proportion or more from the flow rate of the permeating gas acquired when carbon dioxide separation and recovery device 31 is operated under the second predetermined conditions at the time of initial startup.

As a result, carbon dioxide separation and recovery device 31 can increase the flow rate of the permeating gas as compared with that at the time of operating with temperature T0, humidity R0, and pressure P0 of the carbon dioxide-containing gas. Therefore, carbon dioxide separation and recovery device 31 can reduce an influence of an error of a flow meter, and can make an increase in the flow rate of the permeating gas due to the deterioration of separation membrane 2 more noticeable.

That is, carbon dioxide separation and recovery device 31 can estimate the deterioration state of separation membrane 2 with a smaller error during operation.

In addition, in the present exemplary embodiment, temperature T1 higher than temperature T0 under the first predetermined conditions is used as the temperature of the carbon dioxide-containing gas in [1-2-3. Deterioration state estimation operation of separation membrane with higher accuracy]. However, pressure P1 lower than pressure P0 may be used by controlling recovery pump 15 instead of temperature T1. That is, carbon dioxide separation and recovery device 31 may estimate the deterioration state of separation membrane 2 by comparing flow rates of the permeating gas under fourth predetermined conditions including at least pressure P1 lower than pressure P0 of permeating gas channel 13 under the first predetermined conditions.

Here, pressure P1 is lower than pressure P0 (10 kPa) and is 1 kPa to 5 kPa. Preferably, pressure P1 is 1 kPa. However, this value is an example, and pressure P1 is not limited to this value. In addition, similarly to pressure P0, pressure P1 may be controlled so as to fall within a predetermined range.

In this case, it is necessary to change the processing in step S005 and step S007 in Fig. 3 as follows. That is, the processing in step S005 is changed to control recovery pump 15 such that pressure P1 lower than pressure P0 is obtained. In addition, the processing in step S007 is changed to compare the flow rate of the permeating gas acquired in step S006 with a flow rate of the permeating gas acquired when carbon dioxide separation and recovery device 31 is operated with temperature T0, humidity R0, and pressure P1 of the carbon dioxide-containing gas at the time of initial startup. Specifically, it is determined whether the flow rate of the permeating gas acquired in step S006 has increased by the predetermined proportion or more from the flow rate of the permeating gas acquired when carbon dioxide separation and recovery device 31 is operated under the fourth predetermined conditions at the time of initial startup.

As a result, carbon dioxide separation and recovery device 31 can increase the flow rate of the permeating gas as compared with that at the time of operating with temperature T0, humidity R0, and pressure P0 of the carbon dioxide-containing gas. Therefore, carbon dioxide separation and recovery device 31 can reduce an influence of an error of a flow meter, and can make an increase in the flow rate of the permeating gas due to the deterioration of separation membrane 2 more noticeable.

That is, carbon dioxide separation and recovery device 31 can estimate the deterioration state of separation membrane 2 with a smaller error during operation.

In the present exemplary embodiment, carbon dioxide separation and recovery device 31 may also include carbon dioxide concentration detector 20 in recovery channel 16, detect the CO2 concentration of the recovery gas, and stop operation of carbon dioxide separation and recovery device 31 in a case in which the detected CO2 concentration falls below a threshold value.

As a result, carbon dioxide separation and recovery device 31 can prevent the recovery gas having a low CO2 concentration from being stored in the recovery gas tank (not illustrated) in the case of rapid deterioration of separation membrane 2.

Therefore, carbon dioxide separation and recovery device 31 can prevent discharge of the recovery gas having a low CO2 concentration.

### (Other exemplary embodiments)

As described above, the first exemplary embodiment has been described to exemplify the techniques in the present disclosure. However, the techniques in the present disclosure are not limited thereto, and can also be applied to exemplary embodiments in which changes, replacements, additions, omissions, and the like have been made. Furthermore, new exemplary embodiments can be made by combining constituent elements described in the first exemplary embodiment.

Thus, other exemplary embodiments will be described below.

In the first exemplary embodiment, as an example, separation membrane 2 has been described using the polymer membrane containing monoethanolamine that is an amine compound. Separation membrane 2 may be any membrane that selectively allows carbon dioxide to permeate the membrane in a humidified environment. Therefore, separation membrane 2 is not limited to the monoethanolamine that is an amine compound.

However, when a separation membrane containing another amine compound, a separation membrane containing an ionic liquid, or a separation membrane containing an alkali carbonate is used as separation membrane 2, a high carbon dioxide permeation rate can be obtained.

In addition, in the exemplary embodiment described above, the carbon dioxide-containing gas has been described using the exhaust gas obtained by burning a town gas containing hydrocarbon as an example. The carbon dioxide-containing gas in the present disclosure only needs to contain at least carbon dioxide, and is not limited to the exhaust gas obtained by burning a town gas containing hydrocarbon.

In addition, in the exemplary embodiment described above, it has been described that the second predetermined conditions include humidity R1 higher than humidity R0 of the carbon dioxide-containing gas under the first predetermined conditions. This is an example, and the second predetermined conditions in the present disclosure may include, for example, a condition related to the temperature of the carbon dioxide-containing gas or the pressure of permeating gas channel 13 in addition to the humidity of the carbon dioxide-containing gas. For example, the second predetermined conditions in the present disclosure include at least the third predetermined conditions or the fourth predetermined conditions described in the exemplary embodiment described above in addition to the second predetermined conditions described in the exemplary embodiment described above. The same applies to the third predetermined conditions and the fourth predetermined conditions in the present disclosure.

Note that the exemplary embodiment described above is to exemplify the techniques in the present disclosure, and thus, various modifications, replacements, additions, omissions, and the like can be made in the scope of claims or in an equivalent scope of the claims.

### INDUSTRIAL APPLICABILITY

The present disclosure is applicable to a carbon dioxide separation device that recovers carbon dioxide from a carbon dioxide-containing gas and generates a carbon dioxide-enriched gas. Specifically, the present disclosure is applicable to, for example, a hydrogen production device using hydrocarbon as a fuel, a carbon dioxide separation and recovery device that concentrates carbon dioxide in an exhaust gas of a boiler or the like and uses the concentrated carbon dioxide as an industrial material, and the like.

### REFERENCE MARKS IN THE DRAWINGS

- 1: carbon dioxide separator
- 2: separation membrane
- 3: first space
- 4: second space
- 5: carbon dioxide-containing gas supply channel
- 6: separator temperature controller
- 7: exhaust channel
- 8: water supply channel
- 9: evaporator
- 10: temperature and humidity controller
- 11: pressure detector
- 12: water vapor supply channel
- 13: permeating gas channel
- 14: flow rate detector
- 15: recovery pump
- 16: recovery channel
- 20: carbon dioxide concentration detector
- 31: carbon dioxide separation and recovery device
- 41: controller

## Claims

1. A carbon dioxide separation and recovery device comprising:
a carbon dioxide-containing gas supply channel, a carbon dioxide-containing gas containing at least carbon dioxide flowing through the carbon dioxide-containing gas supply channel;
a carbon dioxide separator including a first space, the carbon dioxide-containing gas flowing into the first space through the carbon dioxide-containing gas supply channel, a separation membrane configured to separate carbon dioxide contained in the carbon dioxide-containing gas by selectively allowing the carbon dioxide to permeate the separation membrane, and a second space partitioned from the first space by the separation membrane;
a temperature and humidity controller disposed on the carbon dioxide-containing gas supply channel and configured to control a temperature and a humidity of the carbon dioxide-containing gas before flowing into the first space;
a separator temperature controller configured to control a temperature inside the carbon dioxide separator;
a pressure detector configured to detect a pressure of the second space;
a permeating gas channel, a permeating gas permeating the separation membrane and discharged from the second space flowing through the permeating gas channel;
a flow rate detector disposed on the permeating gas channel and configured to detect a flow rate of the permeating gas;
a recovery pump disposed downstream of the flow rate detector on the permeating gas channel and configured to suck the permeating gas; and
a controller configured to control the separator temperature controller, the temperature and humidity controller, and the recovery pump to set the temperature and the humidity of the carbon dioxide-containing gas and a pressure of the permeating gas channel to a first predetermined condition, and configured to estimate a deterioration state of the separation membrane by comparing a flow rate of the permeating gas under the first predetermined condition, the flow rate being detected by the flow rate detector, with a flow rate of the permeating gas under the first predetermined condition, the flow rate being measured in advance.

2. The carbon dioxide separation and recovery device according to Claim 1,
wherein the separation membrane contains any one of an amine compound, an ionic liquid, and an alkali carbonate that reversibly react with carbon dioxide.

3. The carbon dioxide separation and recovery device according to Claim 1 or 2, wherein the controller controls the separator temperature controller, the temperature and humidity controller, and the recovery pump to achieve a second predetermined condition including at least a humidity higher than the humidity of the carbon dioxide-containing gas under the first predetermined condition, and estimates the deterioration state of the separation membrane by measuring a flow rate of the permeating gas under the second predetermined condition, and comparing the flow rate with a flow rate of the permeating gas under the second predetermined condition, the flow rate being measured in advance.

4. The carbon dioxide separation and recovery device according to Claim 1 or 2, wherein the controller controls the separator temperature controller, the temperature and humidity controller, and the recovery pump to achieve a third predetermined condition including at least a temperature higher than the temperature of the carbon dioxide-containing gas under the first predetermined condition, and estimates the deterioration state of the separation membrane by measuring a flow rate of the permeating gas under the third predetermined condition, and comparing the flow rate with a flow rate of the permeating gas under the third predetermined condition, the flow rate being measured in advance.

5. The carbon dioxide separation and recovery device according to Claim 1 or 2, wherein the controller controls the separator temperature controller, the temperature and humidity controller, and the recovery pump to achieve a fourth predetermined condition including at least a pressure lower than the pressure of the permeating gas channel under the first predetermined condition, and estimates the deterioration state of the separation membrane by measuring a flow rate of the permeating gas under the fourth predetermined condition, and comparing the flow rate with a flow rate of the permeating gas under the fourth predetermined condition, the flow rate being measured in advance.

6. The carbon dioxide separation and recovery device according to any one of Claims 1 to 5, comprising a carbon dioxide concentration detector disposed on the permeating gas channel and configured to measure a carbon dioxide concentration of the permeating gas.

7. A method for operating a carbon dioxide separation and recovery device including:
a carbon dioxide-containing gas supply channel, a carbon dioxide-containing gas containing at least carbon dioxide flowing through the carbon dioxide-containing gas supply channel;
a carbon dioxide separator including a first space, the carbon dioxide-containing gas flowing into the first space through the carbon dioxide-containing gas supply channel, a separation membrane configured to separate carbon dioxide contained in the carbon dioxide-containing gas by selectively allowing the carbon dioxide to permeate the separation membrane, and a second space partitioned from the first space by the separation membrane;
a temperature and humidity controller disposed on the carbon dioxide-containing gas supply channel and configured to control a temperature and a humidity of the carbon dioxide-containing gas before flowing into the first space;
a separator temperature controller configured to control a temperature inside the carbon dioxide separator;
a pressure detector configured to detect a pressure of the second space;
a permeating gas channel, a permeating gas permeating the separation membrane and discharged from the second space flowing through the permeating gas channel;
a flow rate detector disposed on the permeating gas channel and configured to detect a flow rate of the permeating gas; and
a recovery pump disposed downstream of the flow rate detector on the permeating gas channel and configured to suck the permeating gas,
the method comprising:
a condition adjustment step of controlling the separator temperature controller, the temperature and humidity controller, and the recovery pump to set the temperature and the humidity of the carbon dioxide-containing gas and a pressure of the permeating gas channel to a first predetermined condition; and
a deterioration state estimation step of estimating a deterioration state of the separation membrane by comparing a flow rate of the permeating gas under the first predetermined condition, the flow rate being detected by the flow rate detector, with a flow rate of the permeating gas under the first predetermined condition, the flow rate being measured in advance.
